Europäisches Patentamt

(19) European Patent Office    (11) Numéro de publication:    **0 135 474**

Office européen des brevets    **A1**

(12)    **DEMANDE DE BREVET EUROPEEN**

(21) Numéro de dépôt: **84810378.4**    (51) Int. Cl.⁴: **F 16 K 31/06**
                                                    **F 16 K 47/02**
(22) Date de dépôt: **01.08.84**

(30) Priorité: **19.08.83 CH 4527/83**

(43) Date de publication de la demande:
**27.03.85 Bulletin 85/13**

(84) Etats contractants désignés:
**DE FR GB IT SE**

(71) Demandeur: **HONEYWELL LUCIFER SA**
**16, chemin du Faubourg-de-Cruseilles**
**CH-1227 Carouge (Genève)(CH)**

(72) Inventeur: **Livet, Jean**
**Chemin Moise Duboule 23**
**CH-1209 Genève(CH)**

(74) Mandataire: **Ardin, Pierre et al,**
**PIERRE ARDIN & CIE 22, rue du Mont-Blanc**
**CH-1211 Genève 1(CH)**

(54) Valve électromagnétique.

㊗ La valve électromagnétique comporte un corps de valve (3), un noyau magnétique (4) coopérant avec un siège (6), un enroulement (11) pour déplacer le noyau (4) contre l'action d'un ressort (7), un canal d'entrée (19) et un canal de sortie (20). Le corps de valve (3) est logé dans une chambre cylindrique (2) d'un bloc hydraulique (1) présentant un conduit d'entrée (14) et de sortie (22) communiquant avec le canal d'entrée (19), respectivement de sortie (20) du corps de valve (3). Un joint flexible (16) relie la paroi de la chambre cylindrique (2) avec le bord du canal d'entrée (19) et un ressort à compression (23) est disposé entre la face inférieure (24) du corps (3) et le bloc hydraulique (1).

Cette disposition permet de freiner graduellement le liquide en mouvement lors de la fermeture de la valve et de supprimer le coup de bélier. Il est ainsi possible de régler la pression dans une installation suivant une fonction sensiblement linéaire du rapport de la durée d'ouverture de la valve et de la période du courant pulsé alimentant l'enroulement (11).

## FIG. 1

## Valve électromagnétique.

La présente invention concerne une valve électromagnétique comprenant un corps de valve, un clapet porté par un noyau magnétique déplaçable suivant une direction axiale dans un alésage du corps sous l'effet d'un champ magnétique produit par un enroulement électrique, le clapet coopérant avec un siège solidaire du corps, disposé entre un canal d'entrée pour un liquide sous pression et un canal de sortie prévus dans le corps.

On connait déjà des valves de ce type qui fonctionnent avec du courant pulsé variable. Lorsqu'une telle valve est raccordée entre une station de pompage d'un liquide et un appareil utilisateur, il est possible de régler la pression utilisable en faisant varier le rapport entre la durée de fermeture $T_1$ de la valve et la période d'un cycle entier T fermeture/ouverture de la valve.

A chaque fermeture, il se produit dans la valve et dans le conduit une onde de choc se propageant dans le liquide, appelé "coup de bélier" et qui est due à l'inertie du liquide en mouvement. La pression est ainsi considérablement augmentée pendant un court instant après la fermeture de la valve. Le réglage de la pression moyenne utilisable pour des valeurs faibles du rapport $T_1/T$ est délicat, puisque les variations de la pression moyenne en fonction de ce rapport ne sont plus linéaires. Mis à part ces inconvénients de réglage dus au coup de bélier, ce dernier peut présenter un effet nuisible sur les appareils raccordés.

La présente invention à pour but de supprimer le coup de bélier et les inconvénients y liés et de permettre un réglage de la pression moyenne suivant une fonction sensiblement linéaire. La valve comporte à cet effet, un bloc hydraulique présentant une chambre cylindrique dans laquelle le corps de valve est logé de façon déplaçable suivant ladite direction axiale, un conduit d'entrée du liquide sous pression et un conduit de sortie aboutissant à cette chambre cylindrique, au moins un joint élastique reliant de manière étanche les parois de la chambre cylindrique audit corps de valve de façon à séparer le conduit et le canal d'entrée du conduit et du canal de sortie, un organe élastique étant disposé entre le corps et le bloc pour solliciter le corps dans ladite direction axiale contre l'action du liquide sous pression.

Le dessin annexé représente, schématiquement et à titre d'exemple, une forme d'exécution et une variante de la valve objet de l'invention, ainsi qu'une installation munie d'une telle valve.

La figure 1 est une vue en coupe longitudinale de la valve.

La figure 2 représente une installation comportant une valve pour la régulation de la pression.

La figure 3 illustre un diagramme montrant la mise sous tension V de la valve en fonction du temps t.

La figure 4 représente un diagramme exprimant la pression P instantanée en fonction du temps.

La figure 5 est un diagramme mettant en relation la pression moyenne $\bar{P}$ en fonction du rapport de la durée de fermeture $T_1$ sur la période d'un cycle entier T.

La figure 6 est une vue en coupe longitudinale d'une variante de la forme d'exécution illustrée à la figure 1.

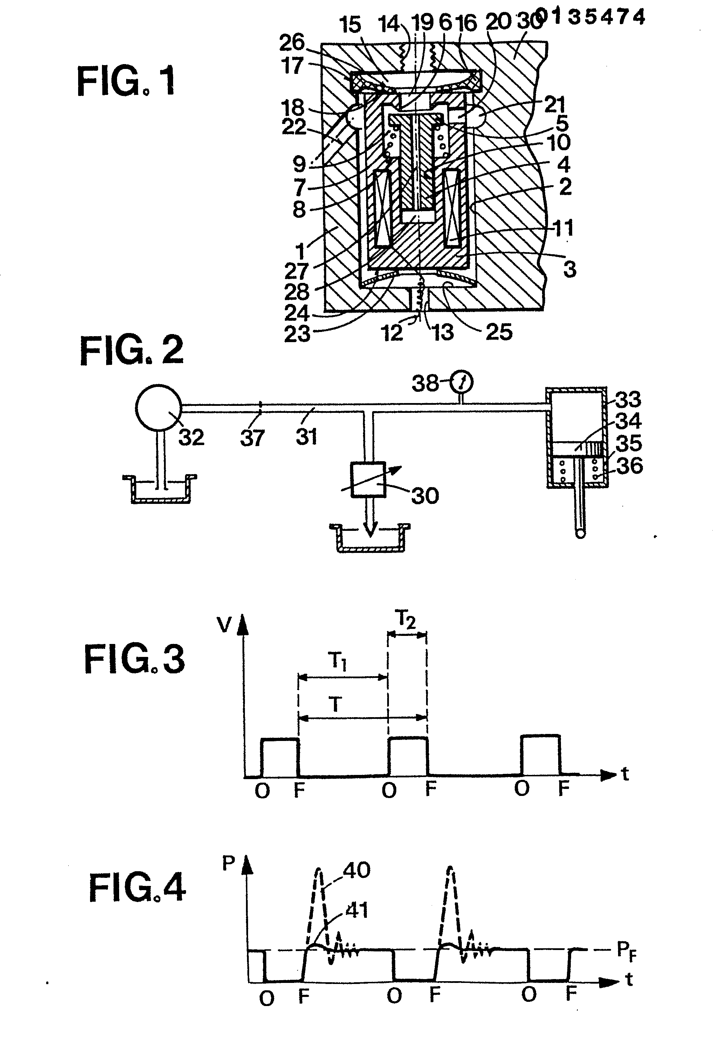

La valve électromagnétique illustrée à la figure 1 comporte un bloc hydraulique 1 présentant une chambre cylindrique 2 dans laquelle est logé un corps de valve 3. Un noyau magnétique 4 est disposé de façon coulissante suivant une direction axiale dans un alésage 10 du corps 3 et porte un clapet 5 coopérant avec un siège 6 solidaire du corps 3, le siège 6 et l'alésage 10 étant de section égale. Le noyau magnétique 4 est sollicité vers sa position de fermeture par un ressort 7 prenant appui d'une part sur le clapet 5 et d'autre part sur un épaulement 8 délimitant une chambre 9 dans le corps 3. Un enroulement 11 est logé dans le corps 3 et relié à une source de courant pulsé, non illustré, par un cable 12 traversant le bloc 1 par une ouverture 13. Cet enroulement 11 produit un champ magnétique sous l'effet duquel le noyau ferromagnétique 4 se déplace d'une position de fermeture F à une position d'ouverture O contre l'action du ressort 7. Le bloc 1 présente un conduit d'entrée 14 du liquide sous pression qui aboutit dans une chambre 15 du bloc 1 séparée de la chambre cylindrique 2 par un joint élastique 16. Ce joint 16 est inserré dans une rainure périphérique 17 de la chambre 15 et prend appui contre la face supérieure 18 du corps de valve 3. Ce dernier présente un canal d'entrée 19 disposé en regard du conduit d'entrée 14 et entouré par le bord 26 du joint flexible 16. Le siège 6 est formé par une nervure annulaire du corps 3 située à l'extrémité interne du canal d'entrée 19. La chambre 9 entourant le noyau magnétique 4 est relié avec la chambre cylindrique 2 par un canal de sortie 20 constitué par un perçage latéral du corps 3. Le bloc 1 comporte une rainure annulaire 21 effectuée en regard du canal de sortie 20. Cette rainure 21 communique avec un conduit de sortie 22. Un ressort à compression 23 constitué par une lame élastique en forme de rondelle est disposé entre la face inférieure 24 du corps de valve 3 et la paroi basale 25 de la chambre 2. Ce ressort 23 sollicite le corps 3 en direction axiale contre l'action du liquide sous pression pénétrant par le conduit 14 dans la chambre 15. Il constitue en quelque sorte une suspension élastique du corps de valve 3 dans la chambre cylindrique 2 du bloc 1. Il permet en outre de séparer de façon étanche l'ouverture 13 pour le câble 12 du reste de la chambre cylindrique 2.

Le noyau 4 comporte un perçage central 27 reliant le canal d'entrée 19 avec une chambre 28 disposée sur le côté opposé au côté du noyau 4 portant le clapet 5. Le noyau 4 ne subit de ce fait pas de forces hydrauliques susceptibles de modifier sa position qui est uniquement définie par le courant d'excitation dans l'enroulement 11 et par la force de rappel du ressort 7.

En référence à la figure 2, une valve électromagnétique 30, telle que décrite ci-dessus, est montée sur un conduit 31 reliant une station de pompage 32 à un appareil utilisateur 33 représenté schématiquement par un piston 34 coulissant dans un cylindre 35 contre l'action d'un ressort 36. Le conduit 31 comporte un étranglement 37 agencé en amont de la valve 30. Un manomètre 38 branché sur le conduit 31 vers le raccordement à l'utilisateur permet de mesurer la pression et de commander par l'intermédiaire d'une unité de commande, non illustrée, la valve 30.

Tel qu'illustré à la figure 3, la valve 30 est alimentée en courant pulsé d'une période T prédéterminée. La mise sous tension V de la valve 30 s'effectue pendant une durée $T_2$ variable et en fonction de la pression désirée. Une mise sous tension de l'enroulement 11 déplace le noyau électromagnétique 4 contre l'action du ressort 7 et ouvre la valve pour faire échapper une quantité donnée du liquide sous pression. Lorsque la tension d'alimentation est interrompue, la valve reste fermée pendant une durée $T_1$.

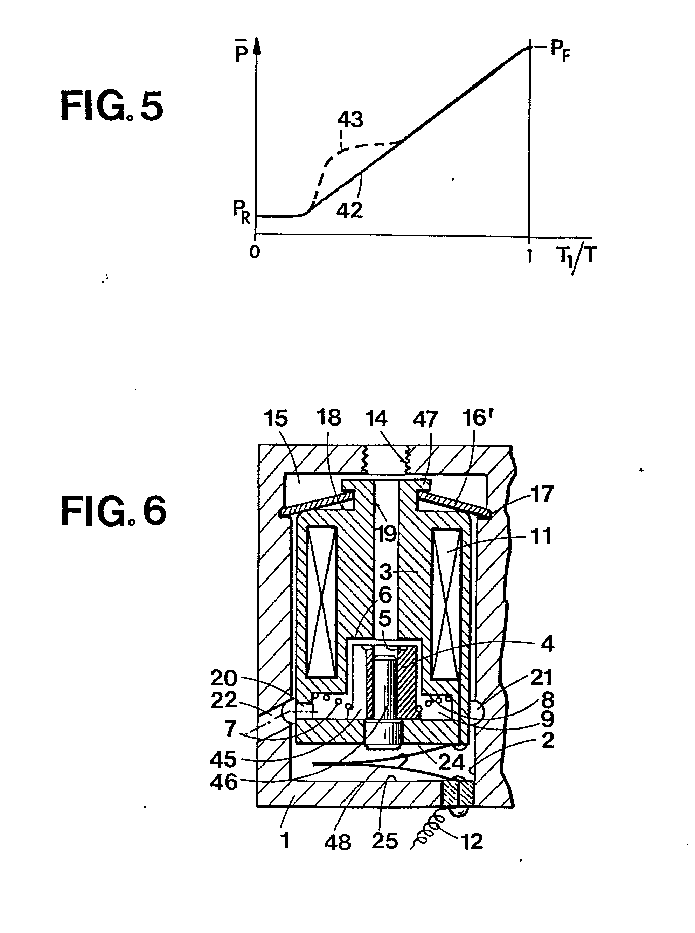

Le diagramme de la figure 4 illustre les variations de la pression lors de la fermeture F et de l'ouverture O d'une valve électromagnétique de régulation. En trait interrompu 40 on a illustré le cas d'une valve ordinaire sans organe destiné à supprimer le coup de bélier. Immédiatement après la fermeture F, il se produit une augmentation considérable de la pression qui s'atténue en une onde amortie pour se stabiliser à une pression donnée $P_F$ dépendant de la puissance à fournir par l'utilisateur 33. Avec la valve selon la présente invention le coup

de bélier est supprimé, tel qu'indiqué par la courbe en trait plein 41. Lors de la fermeture, lorsque la pression $P_F$ est atteinte, l'onde de choc due à l'inertie du liquide en mouvement est quasi totalement amortie par le recul du corps de valve 3 dans la chambre cylindrique 2 contre l'action du ressort 23. Le liquide en mouvement est ainsi progressivement immobilisé à l'entrée de la valve 30. De ce fait, la valve selon l'invention permet un réglage sensiblement linéaire de la pression moyenne $\bar{P}$ dans le conduit 31 (fig. 2) en agissant sur le rapport $T_1/T$. Ce réglage de la pression moyenne dans le conduit 31 est illustré à la figure 5. La variation de la pression moyenne $\bar{P}$ en fonction du rapport $T_1/T$ est sensiblement linéaire pour la valve selon l'invention supprimant le coup de bélier, tel qu'illustré par la droite 42, en trait plein, reliant une pression résiduelle $P_R$ subsistant dans le conduit 31, lors de l'ouverture permanente de la valve, à la pression $P_F$ correspondant à la fermeture continue de la valve de régulation. En comparaison, on a indiqué en trait interrompu une courbe 43, illustrant l'augmentation considérable de la pression moyenne due au coup de bélier pour des valeurs petites du rapport $T_1/T$. Il existe donc pour les valves ordinaires une relation non linéaire entre la pression moyenne et le rapport $T_1/T$, ce qui complique considérablement le réglage à l'aide de ces valves, qui nécessitent l'établissement de courbes d'étalonnage précises. De tels travaux d'étalonnage ne sont pas nécessaires avec les valves selon la présente invention, puisque le réglage obéit à une fonction sensiblement linéaire.

Dans la forme d'exécution décrite en référence à la figure 1, la valve est en position fermée en l'absence de courant d'excitation. La figure 6 montre une valve qui est ouverte en l'absence de courant d'excitation et qui se ferme sous l'effet de ce courant.

A la figure 6, les éléments correspondants à ceux représentés à la figure 1 portent les mêmes chiffres de référence. Ainsi un corps de valve 3 est logé de façon mobile dans une chambre cylindrique 2 d'un bloc hydraulique 1. Le noyau magnétique 4 présente une fente longitudinale 45 et est sollicité par un ressort 7 vers sa position d'ouverture. Ce noyau 4 est guidé dans son mouvement par un téton de guidage central 46 solidaire du corps de valve 3. Le joint 16' séparant le conduit d'entrée 14 du conduit de sortie 22 se présente sous forme d'une rondelle élastique reliant une portion centrale en saillie 47 du corps 3 à la paroi de la chambre cylindrique. Cette rondelle joue donc également le rôle d'organe élastique sollicitant le corps 3 dans une direction axiale contre l'action du liquide sous pression. Le canal d'entrée 19 est constitué par un perçage central du corps de valve 3. Une lame métallique pliée 48 est disposée entre la face inférieure 24 du corps 3 et la paroi basale 25 de la chambre 2 et relie l'enroulement 11 au câble d'alimentation 12.

Il est bien entendu que la forme d'exécution et la variante décrites ci-dessus ne présentent aucun caractère limitatif. En particulier, le canal et le conduit de sortie pourraient être disposés axialement et des joints à soufflets pourraient être disposés entre le conduit d'entrée, respectivement de sortie et le canal d'entrée, respectivement de sortie. Le ressort en forme de rondelle 23 pourrait, dans ce cas, être remplacé par un ressort à boudin réglable.

## R E V E N D I C A T I O N S

1.      Valve électromagnétique comprenant un corps de valve, un clapet porté par un noyau magnétique déplaçable suivant une direction axiale dans un alésage du corps sous l'effet d'un champ magnétique produit par un enroulement électrique, le clapet coopérant avec un siège solidaire du corps, disposé entre un canal d'entrée pour un liquide sous pression et un canal de sortie prévus dans le corps, c a r a c t é r i s é e  en ce qu'elle comporte un bloc hydraulique présentant une chambre cylindrique dans laquelle le corps de valve est logé de façon déplaçable suivant ladite direction axiale, un conduit d'entrée du liquide sous pression et un conduit de sortie aboutissant à cette chambre cylindrique, au moins un joint élastique reliant de manière étanche les parois de la chambre cylindrique audit corps de valve de façon à séparer le conduit et le canal d'entrée du conduit et du canal de sortie, un organe élastique étant disposé entre le corps et le bloc pour solliciter le corps dans ladite direction axiale contre l'action du liquide sous pression.

2.      Valve selon la revendication 1, c a r a c t é r i s é e  en ce que ledit joint est relié au corps de valve à proximité de son canal d'entrée.

3.      Valve selon la revendication 2, c a r a c t é r i s é e  en ce que le joint délimite dans la portion de la chambre cylindrique située entre le conduit et le canal d'entrée, une chambre de travail reliée au conduit d'entrée pour déplacer le corps de valve sous l'action du liquide sous pression contre l'action dudit organe élastique lorsque la valve est fermée.

4.      Valve selon la revendication 1, dans laquelle le canal de sortie est constitué par au moins un perçage latéral du corps de valve, c a r a c t é - r i s é e  en ce que la chambre cylindrique comporte une rainure annulaire disposée en regard de ce perçage, cette rainure communiquant avec le conduit de sortie prévu dans le bloc.

5.      Valve selon la revendication 1, c a r a c t é r i s é e  en ce que le conduit et le canal d'entrée sont disposés de façon axiale sur un premier côté de la chambre cylindrique et en ce que l'élément élastique est constitué par un ressort à compression disposé entre le corps et la paroi du côté opposé au premier côté de la chambre cylindrique.

6.       Utilisation de la valve selon l'une des revendications 1 à 5, comme organe de régulation de la pression dans une installation hydrauliques.

7.       Utilisation selon la revendication 6, dans laquelle la valve est alimentée en courant pulsé d'une période T, c a r a c t é r i s é e  en ce que ladite régulation est effectuée suivant une fonction sensiblement linéaire entre la pression et le rapport de la durée de fermeture $T_1$ de la valve et de la période T.

FIG. 1

FIG. 2

FIG. 3

FIG. 4

0135474

FIG. 5

FIG. 6

# RAPPORT DE RECHERCHE EUROPEENNE

Office européen des brevets

**0135474**
Numéro de la demande

EP 84 81 0378

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | WO-A-8 001 502 (RENAULT) | | F 16 K 31/06<br>F 16 K 47/02 |
| | ----- | | |

**DOMAINES TECHNIQUES RECHERCHES (Int. Cl.4)**

F 16 K

Le present rapport de recherche a été établi pour toutes les revendications

| Lieu de la recherche | Date d'achèvement de la recherche | Examinateur |
|---|---|---|
| LA HAYE | 13-11-1984 | VERELST P.E.J. |